# EUROPEAN PATENT SPECIFICATION

(11) **EP 4 166 585 B1**
(45) Date of publication and mention of the grant of the patent: **22.10.2025**
(21) Application number: 21821598.6
(22) Date of filing: 08.04.2021
(51) Int. Cl.: C08F 290/06, C08L 83/04

(54) **ULTRAVIOLET RAY-CURABLE SILICONE COMPOSITION AND CURED PRODUCT THEREOF**
DURCH ULTRAVIOLETTSTRAHLUNG HÄRTBARE SILIKONZUSAMMENSETZUNG UND GEHÄRTETES PRODUKT DARAUS
COMPOSITION DE SILICONE DURCISSABLE PAR ULTRAVIOLETS ET PRODUIT DURCI ASSOCIÉ

(30) Priority: 12.06.2020 JP 2020102352
(43) Date of publication of application: 19.04.2023
(73) Proprietor: SHIN-ETSU CHEMICAL CO., LTD., Tokyo 1000005 (JP)
(72) Inventor: OTAKE, Kohei, Annaka-shi, Gunma 379-0224 (JP); ASAKURA, Eri, Annaka-shi, Gunma 379-0224 (JP)
(74) Representative: Ter Meer Steinmeister & Partner
(86) International application number: PCT/JP2021/014894
(87) International publication number: WO 2021/250988

(56) References cited:
- WO-A1-2018/225430
- JP-A- 2011 137 050
- JP-A- 2016 190 979
- JP-A- 2021 059 658
- JP-A- H06 179 820
- JP-A- H06 179 820
- US-A1- 2003 064 232
- US-A1- 2020 131 408

## Description

### TECHNICAL FIELD

The present invention relates to an ultraviolet-curable silicone composition and a cured product thereof.

### BACKGROUND ART

Ultraviolet-curable materials which have a high refractive index and transparency and which cure in a short time when irradiated with ultraviolet (UV) light have attracted attention in recent years as lens materials having a fine shape.

Because lens formation is generally carried out by an imprinting technique that uses a mold, materials that cure instantly under UV irradiation are highly advantageous in terms of the efficiency of lens production. In addition, UV-curable materials, because they do not require heating, have the advantage that changes in the lens dimensions due to heat shrinkage need not be taken into account.

UV-curable acrylic materials (Patent Document 1) and epoxy materials (Patent Document 2) are known as such materials. However, because these materials have an organic polymer backbone, their heat resistance is inferior, making them unsuitable for applications requiring long-term heat resistance and reflow resistance.

A silicone adhesive formulated with a photoactive platinum complex catalyst has been disclosed as a UV-curable material of excellent heat resistance (Patent Document 3). However, this material takes time to cure fully, in addition to which heat is required following UV irradiation, all of which makes it unsuitable for molding lenses. US2020/131408 A1 discloses a UV curable silicone composition for a pressure sensitive adhesive based on a diorganosiloxane with at least two (meth)acryloyl (oxy)alkyl termini, a non-siloxane mono(meth)acrylate, a non-siloxane poly(meth)acrylate, an MQ resin and a photoinitiator.

### PRIOR ART DOCUMENTS

### PATENT DOCUMENTS

Patent Document 1: JP No. 6124379
Patent Document 2: JP No. 4984111
Patent Document 3: JP-A 2015-110752

### SUMMARY OF INVENTION

### TECHNICAL PROBLEM

The present invention was arrived at in light of the above circumstances. The object of this invention is to provide a UV-curable silicone composition which has a good UV curability and which gives a cured product of excellent refractive index, transparency and heat resistance.

### SOLUTION TO PROBLEM

The inventors have conducted intensive investigations in order to achieve the above object. As a result, they have discovered by using a specific organopolysiloxane having (meth)acryloyloxy-containing groups and a specific organopolysiloxane resin having (meth)acryloyloxy-containing groups, curing takes place rapidly under UV irradiation, enabling a silicone cured product of excellent refractive index, transparency and heat resistance to be obtained.

Accordingly, the invention provides:
1. An ultraviolet-curable silicone composition that includes:
   (A) an organopolysiloxane which has a main chain made of repeating diorganosiloxane units and a group of general formula (1) below at one or both terminals and in which 5% or more of all silicon-bonded monovalent organic groups are aryl groups 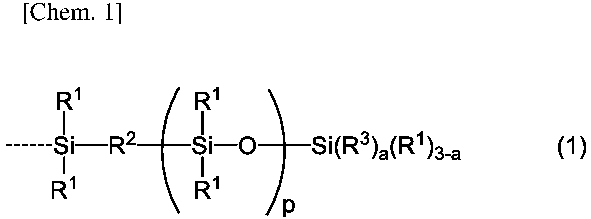 (wherein each R¹ is independently a monovalent hydrocarbon group of from 1 to 20 carbon atoms, R² is an oxygen atom or an alkylene group of from 1 to 20 carbon atoms, each R³ is independently an acryloyloxyalkyl, methacryloyloxyalkyl, acryloyloxyalkyloxy or methacryloyloxyalkyloxy group, p is a number that satisfies the condition 0 ≤ p ≤ 10, a is a number that satisfies the condition 1 ≤ a ≤ 3, and the dashed line represents a point of attachment);
   (B) an organopolysiloxane resin comprised of (a) units of general formula (2) below 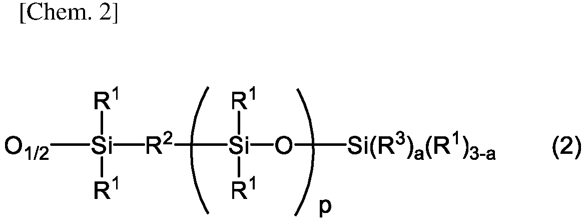 (wherein R¹, R², R³, a and p are as defined above), (b) R¹₃SiO_{1/2} units (wherein R¹ is as defined above), (c) R¹₂SiO_{2/2} units (wherein R¹ is as defined above) and (d) SiO_{4/2} units, and in which 5% or more of all silicon-bonded monovalent organic groups are aryl groups; and
   (C) a photopolymerization initiator;
2. The ultraviolet-curable silicone composition of 1 above, further including:
   (D) a monofunctional (meth)acrylate compound which does not include a siloxane structure;
3. The ultraviolet-curable silicone composition of 1 or 2 above, further including:
   (E) a silane coupling agent which has a (meth)acryloyloxy group;
4. A cured product of the ultraviolet-curable silicone composition of any of 1 to 3 above; and
5. A lens made of the cured product of 4 above.

### ADVANTAGEOUS EFFECTS OF INVENTION

The ultraviolet-curable silicone composition of the invention has a good curability under UV irradiation. Moreover, the resulting cured product has a high refractive index and transparency, in addition to which the transparency is very heat-resistant, thus making the composition suitable for use as a material for molding lenses.

### DESCRIPTION OF EMBODIMENTS

The invention is described in detail below.

The ultraviolet-curable silicone composition of the invention includes components (A) to (C) below:
(A) an organopolysiloxane which has a main chain made of repeating diorganosiloxane units and a group of general formula (1) below at one or both terminals and in which 5% or more of all silicon-bonded monovalent organic groups are aryl groups;
(B) an organopolysiloxane resin comprised of (a) units of general formula (2) below, (b) R¹₃SiO_{1/2} units, (c) R¹₂SiO_{2/2} units and (d) SiO_{4/2} units, and in which 5% or more of all silicon-bonded monovalent organic groups are aryl groups; and
(C) a photopolymerization initiator.

### (A) Organopolysiloxane

Component (A) used in this invention is an organopolysiloxane which has a main chain made of repeating diorganosiloxane units and a group of general formula (1) below at one or both terminals.

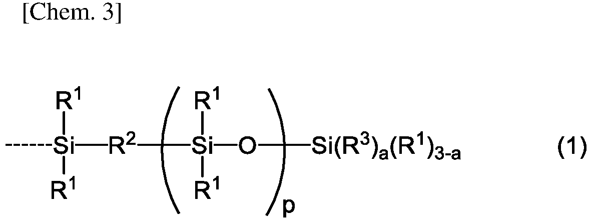

In formula (1), each R¹ is independently a monovalent hydrocarbon group of from 1 to 20 carbon atoms, and is preferably a monovalent hydrocarbon group of from 1 to 10 carbon atoms, especially from 1 to 8 carbon atoms, exclusive of aliphatic unsaturated groups.

R² is an oxygen atom or an alkylene group of from 1 to 20 carbon atoms, and is preferably an alkylene group of from 1 to 10 carbon atoms, especially from 1 to 5 carbon atoms.

Each R³ is independently an acryloyloxyalkyl, methacryloyloxyalkyl, acryloyloxyalkyloxy or methacryloyloxyalkyloxy group.

In formula (1), the monovalent hydrocarbon group of from 1 to 20 carbon atoms represented by R¹ may be linear, branched or cyclic and is exemplified by alkyl, alkenyl, aryl and aralkyl groups.

Specific examples of these include alkyl groups such as methyl, ethyl, n-propyl, isopropyl, n-butyl, isobutyl, tert-butyl, n-hexyl, cyclohexyl, n-octyl, 2-ethylhexyl and n-decyl groups; alkenyl groups such as vinyl, allyl (2-propenyl), 1-propenyl, isopropenyl and butenyl groups; aryl groups such as phenyl, tolyl, xylyl and naphthyl groups; and aralkyl groups such as benzyl, phenylethyl and phenylpropyl groups.

Some or all of the hydrogen atoms bonded to carbon atoms on these monovalent hydrocarbon groups may be substituted with halogen atoms such as chlorine, fluorine and bromine or with other substituents such as cyano groups. Specific examples of such substituted monovalent hydrocarbon groups include halogen-substituted hydrocarbon groups such as chloromethyl, bromoethyl and trifluoropropyl groups; and cyano-substituted hydrocarbon groups such as the cyanoethyl group.

Of these, R¹ is preferably an alkyl group of 2 to 5 carbon atoms or a phenyl group, and is more preferably a methyl, ethyl or phenyl group.

The alkylene group of 1 to 20 carbon atoms represented by R² may be linear, branched or cyclic. Specific examples include methylene, ethylene, propylene, trimethylene, tetramethylene, isobutylene, pentamethylene, hexamethylene, heptamethylene, octamethylene, nonamethylene and decylene groups.

Of these, R² is preferably an oxygen atom or a methylene, ethylene or trimethylene group, and is more preferably an oxygen atom or an ethylene group.

The number of carbon atoms on the alkyl (alkylene) group in the acryloyloxyalkyl, methacryloyloxyalkyl, acryloyloxyalkyloxy or methacryloyloxyalkyloxy group represented by R³, although not particularly limited, is preferably from 1 to 10, and more preferably from 1 to 5. Specific examples of these alkyl groups include, of the groups mentioned above in connection with R¹, those having from 1 to 10 carbon atoms.

Specific examples of R³ include, but are not limited to, those having the following formulas.

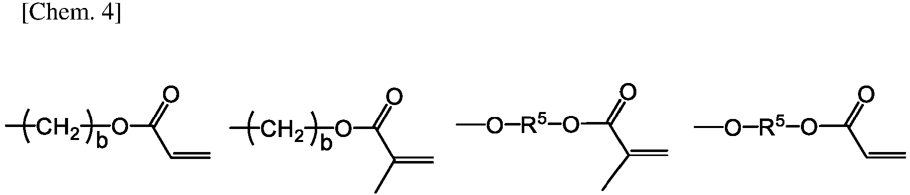

In these formulas, b is a number which satisfies the condition 1 ≤ b ≤ 4, and is preferably a number which satisfies the condition 1 ≤ b ≤ 3.

R⁵ is an alkylene group having from 1 to 10 carbon atoms, and is preferably an alkylene group having from 1 to 5 carbon atoms. Specific examples of R⁵ include, of the groups mentioned above in connection with R², those having from 1 to 10 carbon atoms. Of these, methylene, ethylene and trimethylene groups are preferred; an ethylene group is more preferred.

In formula (1), p is a number which satisfies the condition 0 ≤ p ≤ 10, preferably satisfies the condition 0 ≤ p ≤ 5, and is more preferably 0 or 1. Also, a is a number which satisfies the condition 1 ≤ a ≤ 3, and is more preferably 1 or 2.

The bonding site for the group of general formula (1) in the organopolysiloxane molecule of component (A) is at one or both terminals of the molecular chain. In addition, this molecule may also have a group of general formula (1) at a non-terminal site on the molecular chain (that is, partway along the molecular chain or on a side chain of the molecular chain). However, from the standpoint of the mechanical properties of the resulting cured product, it is preferable for groups of general formula (1) to be present only at the terminals.

In the organopolysiloxane molecule serving as component (A), silicon-bonded organic groups other than the groups of general formula (1) are exemplified by the same groups as R¹, with monovalent hydrocarbon groups of from 1 to 12 carbons, especially from 1 to 10 carbons, exclusive of aliphatic unsaturated groups, being preferred.

Specific examples include the same as those mentioned above in connection with R¹. However, from the standpoint of ease of synthesis, alkyl and aryl groups are preferred, with methyl and phenyl groups being more preferred.

Of the total number of silicon-bonded monovalent organic groups in component (A), it is essential for 5% or more to be aryl groups, and preferable for 10% or more to be aryl groups. When less than 5% are aryl groups, the resulting cured product has a low refractive index. The aryl groups are preferably phenyl groups.

The organopolysiloxane serving as component (A) has a viscosity at 25°C which, to further enhance the workability of the composition and the mechanical properties of the cured product, is preferably from 10 to 100,000 mPa·s, and more preferably from 10 to 50,000 mPa·s. This viscosity range generally corresponds to, in the case of a linear organopolysiloxane, a number-average degree of polymerization of from about 10 to about 2,000, and preferably from about 50 to about 1,100.

In this invention, here and below, the viscosity can be measured with a rotational viscometer (e.g., a BL, BH, BS or cone and plate viscometer or a rheometer).

In this invention, the degree of polymerization (or molecular weight) can be determined as the polystyrene-equivalent number-average degree of polymerization (or number-average molecular weight) by gel permeation chromatographic (GPC) analysis using toluene or the like as the developing solvent (the same applies below).

Specific examples of the organopolysiloxane serving as component (A) include, but are not limited to, those represented by formulas (3) to (6) below. 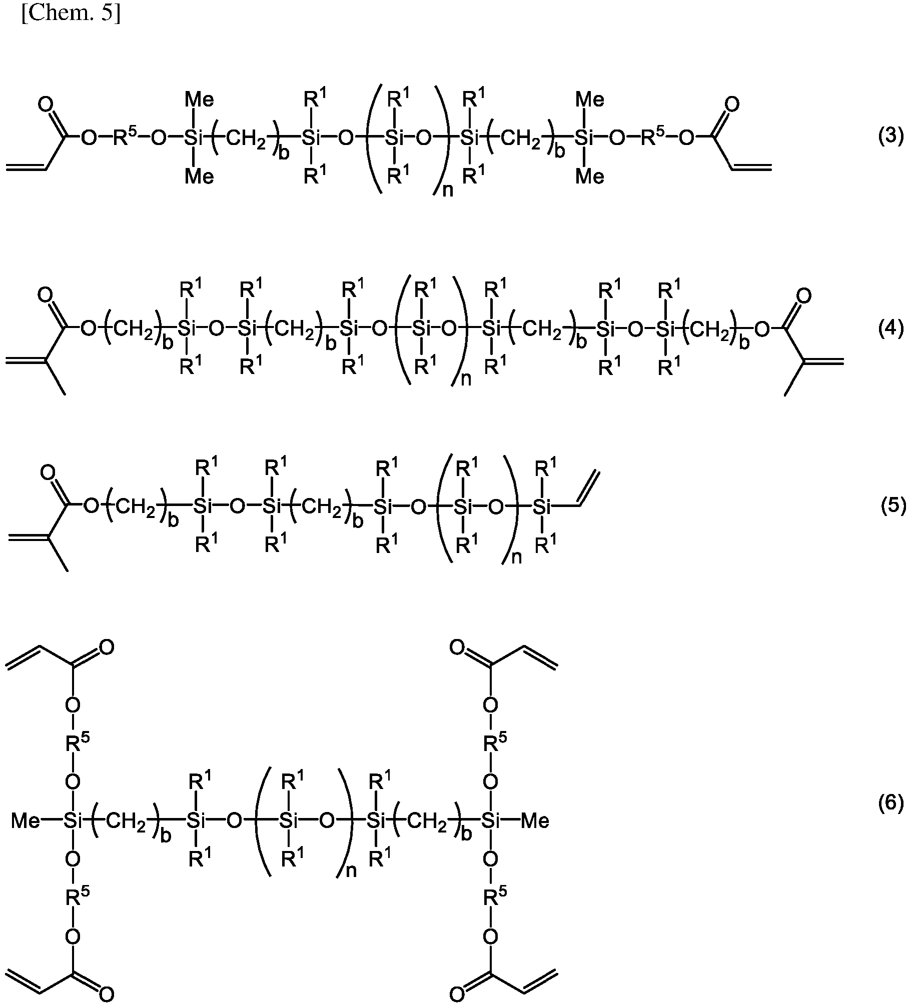 In these formulas, R¹, R⁵ and b are as defined above, Me stands for a methyl group, and n is a number that sets the viscosity of the organopolysiloxane to the above-indicated value, this number being preferably from 1 to 800, and more preferably from 50 to 600.

Organopolysiloxanes such as these can be produced by known methods. For example, the polysiloxane of formula (3) can be obtained by reacting 2-hydroxyethyl acrylate with the product of a hydrosilylation reaction between a dimethylsiloxane/diphenylsiloxane copolymer capped at both ends with dimethylvinylsiloxane groups and chlorodimethylsilane.

The organopolysiloxanes of formulas (4) and (5) can be obtained as the product of a hydrosilylation reaction between a dimethylsiloxane/diphenylsiloxane copolymer capped at both ends with dimethylvinylsiloxy groups and 3-(1,1,3,3-tetramethyldisiloxanyl)propyl methacrylate (CAS No. 96474-12-3).

The organopolysiloxane of formula (5) can be obtained by reacting 2-hydroxyethyl acrylate with the product of a hydrosilylation reaction between a dimethylsiloxane/diphenylsiloxane copolymer capped at both ends with dimethylvinylsiloxy groups and dichloromethylsilane.

### (B) Organopolysiloxane Resin

Component (B), which is one of the crosslinked ingredients of the composition, is an organopolysiloxane resin having (a) units of general formula (2) below (M^{A} units), (b) R¹₃SiO_{1/2} units, (c) R¹₂SiO_{2/2} units and (d) SiO_{4/2} units.

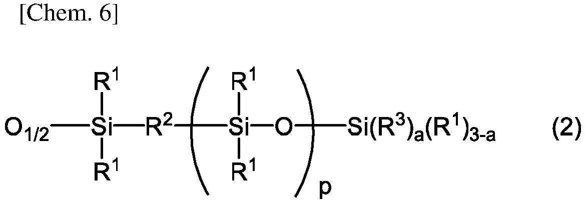

R¹, R², R³, a and p in formula (2) representing the (a) units, and R¹ in the (b) units and (c) units are as defined above.

Of all the silicon-bonded monovalent organic groups in component (B), 5% or more are aryl groups, and preferably 10% or more are aryl groups. When less than 5% are aryl groups, the resulting cured product has a low refractive index. The aryl groups are preferably phenyl groups.

The content of (a) units with respect to all the siloxane units in the organopolysiloxane resin of component (B) is preferably from 5 to 30 wt%, and more preferably from 10 to 25 wt%. Within this range, the mechanical properties of the cured product are good.

Component (B) may include, as constitutional units, trifunctional siloxane units represented as R¹SiO_{3/2} (where R¹ is the same as above) (i.e., organosilsesquioxane units). In this case, the collective content of R¹SiO_{3/2} units and SiO_{4/2} units is preferably from 10 to 90 mol%, and more preferably from 20 to 80 mol%, of the total siloxane units in the organopolysiloxane resin serving as component (B).

Component (B) has a number-average molecular weight that is preferably from 500 to 30,000, and more preferably from 1,000 to 20,000. Within this range, the workability of the composition is good. The number-average molecular weight is the standard polystyrene-equivalent value in gel permeation chromatography (GPC).

The amount of component (B) included per 100 parts by weight of component (A) is preferably from 1 to 1,000 parts by weight, and more preferably from 10 to 800 parts by weight. Within this range, the workability of the composition and the mechanical properties of the cured product are excellent.

Component (B) may be of one type used alone, or two or more types may be used together.

### (C) Photopolymerization Initiator

Specific examples of photopolymerization initiators that can be used in this invention include 2,2-diethoxyacetophenone, 2,2-dimethoxy-1,2-diphenylethan-1-one (Omnirad 651), 1-hydroxycyclohexyl phenyl ketone (Omnirad 184), 2-hydroxy-2-methyl-1-phenylpropan-1-one (Omnirad 1173), 2-hydroxy-1-{4-[4-(2-hydroxy-2-methylpropionyl)benzyl]phenyl}-2-methylpropan-1-one (Omnirad 127), phenylglyoxylic acid methyl ester (Omnirad MBF), 2-methyl-1-[4-(methylthio)phenyl]-2-morpholinopropan-1-one (Omnirad 907), 2-benzyl-2-dimethylamino-1-(4-morpholinophenyl)butan-1-one (Omnirad 369), 2-dimethylamino-2-(4-methylbenzyl)-1-(4-morpholin-4-yl-phenyl)butan-1-one (Omnirad 379EG), bis(2,4,6-trimethylbenzoyl)phenylphosphine oxide (Omnirad 819) and 2,4,6-trimethylbenzoyl-diphenyl-phosphine oxide (Omnirad TPO) (all products of IGM Resins B.V). One of these may be used alone, or two or more may be used in combination.

To discourage oxygen inhibition during UV curing and enhance surface curability, component (C) is preferably an α-aminoacetophenone-type photopolymerization initiator, and is more preferably 2,2-diethoxyacetophonene, 2-hydroxy-2-methyl-1-phenylpropan-1-one (Omnirad 1173), bis(2,4,6-trimethylbenzoyl)phenylphosphine oxide (Omnirad 819), 2,4,6-trimethylbenzoyl-diphenyl-phosphine oxide (Omnirad TPO), 2-benzyl-2-dimethylamino-1-(4-morpholinophenyl)butan-1-one (Omnirad 369) or 2-dimethylamino-2-(4-methylbenzyl)-1-(4-morpholin-4-yl-phenyl)butan-1-one (Omnirad 379EG) (all of which are products of IGM resins B.V.).

From the standpoint of curability, the amount of photopolymerization initiator added per 100 parts by weight of component (A) is preferably from 0.01 to 50 parts by weight, and more preferably from 0.1 to 10 parts by weight.

In addition, (D) a monofunctional (meth)acrylate compound which does not include a siloxane structure may be added to the inventive composition for the purpose of adjusting the mechanical properties or viscosity.

Specific examples include isoamyl acrylate, lauryl acrylate, stearyl acrylate, ethoxy(diethylene glycol) acrylate, methoxy(triethylene glycol) acrylate, 2-ethylhexyl(diglycol) acrylate, phenoxyethyl acrylate, phenoxydiethylene glycol acrylate, tetrahydrofurfuryl acrylate, isobornyl acrylate and dimethylol tricyclodecane diacrylate. These may be used singly or two or more may be used in admixture.

Of these, isobornyl acrylate and dimethylol tricyclodecane diacrylate are especially preferred.

When component (D) is used, the amount of addition per 100 parts by weight of component (A) is preferably in the range of 1 to 1,000 parts by weight.

Also, (E) a silane coupling agent which has a (meth)acryloyloxy group may be added so as to impart adhesive properties to the inventive composition.

Specific examples include (meth)acryloyloxymethyl trimethoxysilane, (meth)acryloyloxymethyl triethoxysilane, (meth)acryloyloxyethyl trimethoxysilane, (meth)acryloyloxyethyl triethoxysilane, (meth)acryloyloxypropyl trimethoxysilane, (meth)acryloyloxypropyl triethoxysilane, (meth)acryloyloxyoctyl trimethoxysilane and (meth)acryloyloxyoctyl triethoxylsilane.

These may be acquired as commercial products, examples of which include γ-(methacryloxypropyl)trimethoxysilane (trade name: KBM-503, from Shin-Etsu Chemical Co., Ltd.), γ-(acryloxypropyl) trimethoxysilane (trade name: KBM-5103, from Shin-Etsu Chemical Co., Ltd.) and methacryloxyoctyl trimethoxysilane (trade name: KBM-5803, from Shin-Etsu Chemical Co., Ltd.).

When component (E) is used, the amount included per 100 parts by weight of component (A) is preferably from 0.1 to 100 parts by weight, and more preferably from 0.2 to 50 parts by weight.

Additives such as finely powdered silica, colorants (pigments or dyes), silane coupling agents other than component (E), adhesive modifiers, polymerization inhibitors, antioxidants, ultraviolet absorbers that are light-resistant stabilizers, and light stabilizers may be included in the inventive composition within ranges that do not detract from the advantageous effects of the invention.

In addition, the inventive composition may also be suitably mixed with other resin compositions and used.

The UV-curable silicone composition of the invention can be obtained by mixing together in any order and stirring above components (A) to (C) and, optionally, component (D) component (E) and other ingredients. Apparatuses that may be used in stirring and other operations are not particularly limited and include, for example, automated mortars, three-roll mills, ball mills and planetary mixers. These apparatuses may also be suitably combined.

The UV-curable silicone pressure-sensitive adhesive composition of the invention has a viscosity, as measured at 23°C using a rotational viscometer which, from the standpoint of the moldability at the time of application and the workability, is preferably not more than 5,000 Pa·s, more preferably not more than 3,000 Pa·s, and even more preferably not more than 1,500 Pa·s. At a viscosity greater than 5,000 Pa·s, the workability may become very poor.

The ultraviolet-curable silicone pressure-sensitive adhesive composition of the invention has a refractive index, as measured at 25°C and a wavelength of 589 nm, which is preferably 1.45 or more, more preferably 1.50 or more, and even more preferably 1.52 or more. The refractive index can be measured with, for example the RX-5000 digital refractometer from ATAGO.

The UV-curable silicone composition of the invention rapidly cures when irradiated with ultraviolet light.

Illustrative examples of light sources for the irradiated ultraviolet light in this case include UV LED lamps, high-pressure mercury lamps, ultrahigh-pressure mercury lamps, metal halide lamps, carbon arc lamps and xenon lamps.

The amount of UV irradiation (total exposure dose) on, for example, a sheet obtained by molding the inventive composition to a thickness of about 2.0 mm, is preferably from 1 to 10,000 mJ/cm², and more preferably from 10 to 8,000 mJ/cm². That is, when using ultraviolet light having an illuminance of 100 mW/cm², the light should be irradiated for a period of from about 0.01 second to about 100 seconds.

The cured product of the invention has a transmittance, expressed as the transmittance at 25°C of directly propagating 400 nm wavelength light, which is preferably 80% or more, and more preferably 85% or more.

After 500 hours of heating at 150°C, the cured product of the invention has a transmittance to directly propagating 400 nm wavelength light at 25°C which is preferably 80% or more, and more preferably 82% or more. The transmittance can be measured using the U-3900 spectrophotometer from Hitachi High-Tech Corporation.

### EXAMPLES

Examples of the invention and Comparative Examples are given below by way of illustration, although the invention is not limited by these Examples.

The compounds for the respective ingredients used in the Examples are as shown below. Here, "Me" stands for a methyl group, "Ph" stands for a phenyl group and "Vi" stands for a vinyl group.

### Component (A)

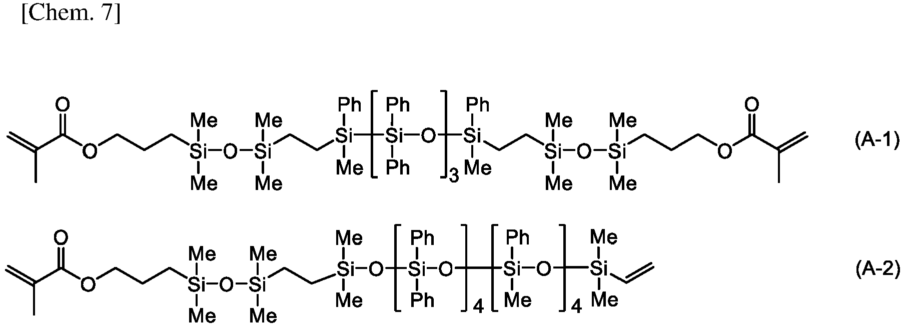

In the formulas, the siloxane units within brackets may be arranged in any sequence.

### Component (B)

(B-1) 50 wt% xylene solution of an organopolysiloxane resin (number-average molecular weight, 2,100) having methacryloyloxy group-containing units of formula (7) below, ViMePhSiO_{1/2} units, Ph₂SiO_{2/2} units and SiO₂ units, in which the molar ratio of methacryloyloxy group-containing units/ViMePhSiO_{1/2} units/Ph₂SiO_{2/2} units/SiO₂ units is 16/4/38/42
(B-2) 50 wt% xylene solution of an organopolysiloxane resin (number-average molecular weight, 1,600) having methacryloyloxy group-containing units of formula (7) below, ViMePhSiO_{1/2} units, Ph₂SiO_{2/2} units and SiO₂ units, in which the molar ratio of methacryloyloxy group-containing units/ViMePhSiO_{1/2} units/Ph₂SiO_{2/2} units/SiO₂ units is 10/15/30/45
(B-3) 50 wt% xylene solution of an organopolysiloxane resin (number-average molecular weight, 1,800) having methacryloyloxy group-containing units of formula (7) below, ViMePhSiO_{1/2} units, Ph₂SiO_{2/2} units and SiO₂ units, in which the molar ratio of methacryloyloxy group-containing units/ViMePhSiO_{1/2} units/Ph₂SiO_{2/2} units/SiO₂ units is 22/3/30/45

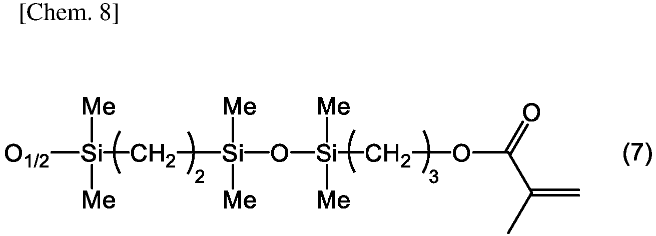

### Component (C)

(C-1) 2-Hydroxy-2-methyl-1-phenylpropan-1-one (Omnirad 1173, from IGM Resins B.V.)

### Component (D)

(D-1) Isobornyl acrylate (Light Acrylate IB-XA, from Kyoeisha Chemical Co., Ltd.)
(D-2) Dimethylol tricyclodecane diacrylate (Light Acrylate DCP-A, from Kyoeisha Chemical Co., Ltd.)

### Component (E)

(E-1) 3-Methacryloxypropyltrimethoxysilane (KBM-503, from Shin-Etsu Chemical Co., Ltd.)

### [Examples 1 to 8 and Comparative Example 1]

The respective silicone compositions in Table 1 were prepared by mixing together components (A) and (B) in the proportions shown in Table 1, distilling off the xylene under reduced pressure at 100°C, and then mixing in components (C) to (E).

The following properties were evaluated for the resulting compositions and cured products thereof. The results are presented in Table 1.

### [Viscosity]

The viscosities of the compositions in Table 1 were measured at 23°C using a rotational viscometer.

### [Refractive Index]

The refractive indices of the compositions in Table 1 were obtained by measuring the refractive index of 589 nm wavelength light at 25°C using the RX-5000 digital refractometer from ATAGO. A refractive index of 1.45 or more can be regarded as sufficiently high.

### [Hardness]

Using the Eye UV Electron Controller (model UBX0601-01) from Eye Graphics Co., Ltd., each of the prepared silicone compositions was irradiated with UV light in a nitrogen atmosphere and at room temperature (25°C) to an exposure dose based on 365 nm wavelength UV light of 4,000 mJ/cm², and thereby cured The sheet thickness was set to 2.0 mm. The hardnesses of the resulting cured products were measured in accordance with JIS K6249:2003.

### [Light Transmittance]

The transmittance of directly propagating 400 nm wavelength light at 25°C by each of the cured products created in the same way as for the above hardness measurements was measured, both initially and after 500 hours of heating at 150°C, using the U-3900 spectrophotometer from Hitachi High-Tech Corporation. A transmittance of 80% or more can be regarded as sufficiently high.

**[Table 1]**

| | | Example | | | | | | | | Comp. Ex. |
|---|---|---|---|---|---|---|---|---|---|---|
| | | 1 | 2 | 3 | 4 | 5 | 6 | 7 | 8 | 1 |
| Formulation (pbw) | A-1 | 100 | 100 | 100 | | 100 | 100 | 100 | 100 | 100 |
| | A-2 | | | | 100 | | | | | |
| | B-1 | 200 | | | | 250 | 250 | 200 | 250 | |
| | B-2 | | 200 | | | | | | | |
| | B-3 | | | 200 | 67 | | | | | |
| | C-1 | 0.6 | 0.6 | 0.6 | 1.3 | 1.3 | 1.3 | 0.6 | 1.3 | 0.5 |
| | D-1 | | | | | 25 | | | 25 | 100 |
| | D-2 | | | | | | 25 | | | |
| | E-1 | | | | | | | 6 | 6 | |
| Properties of composition | Viscosity (Pa·s) | 3.6 | 3.0 | 1.9 | 17.0 | 1.5 | 2.6 | 2.1 | 1.2 | 0.05 |
| | Refractive index | 1.54 | 1.54 | 1.54 | 1.54 | 1.53 | 1.54 | 1.54 | 1.54 | 1.51 |
| Properties of cured product | Hardness (Shore D) | 72 | 61 | 70 | 56 | 78 | 80 | 67 | 74 | 80 |
| | Transmittance: initial (%) | 87 | 86 | 87 | 85 | 86 | 86 | 88 | 86 | 88 |
| | Transmittance: after 500 hours at 150°C (%) | 85 | 85 | 86 | 84 | 86 | 85 | 86 | 84 | 50 |

As shown in Table 1, each of the UV-cured silicone compositions prepared in Examples 1 to 8 had a suitable viscosity and a high refractive index. Also, the cured products thereof each had a sufficient hardness and a high transparency. The transmittances of the cured products following the 150°C heating test also maintained high values, indicating that the cured products had high heat resistances. The above demonstrates the usefulness of these silicone compositions and their cured products as lens materials.

On the other hand, in Comparative Example 1, in which component (D) was used in place of component (B), the transmittance following 500 hours of heating at 150°C was low, indicating that the cured product had a poor heat resistance.

## Claims

1. An ultraviolet-curable silicone composition comprising:
(A) an organopolysiloxane which has a main chain made of repeating diorganosiloxane units and a group of general formula (1) below at one or both terminals and in which 5% or more of all silicon-bonded monovalent organic groups are aryl groups 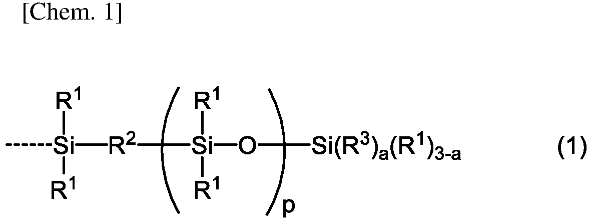 (wherein each R¹ is independently a monovalent hydrocarbon group of from 1 to 20 carbon atoms, R² is an oxygen atom or an alkylene group of from 1 to 20 carbon atoms, each R³ is independently an acryloyloxyalkyl, methacryloyloxyalkyl, acryloyloxyalkyloxy or methacryloyloxyalkyloxy group, p is a number that satisfies the condition 0 ≤ p ≤ 10, a is a number that satisfies the condition 1 ≤ a ≤ 3, and the dashed line represents a point of attachment);
(B) an organopolysiloxane resin comprised of (a) units of general formula (2) below 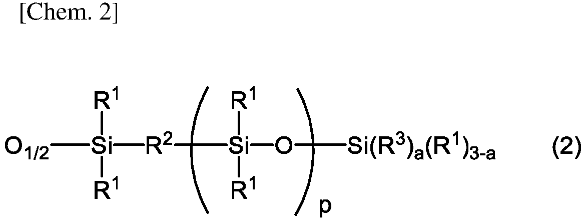 (wherein R¹, R², R³, a and p are as defined above), (b) R¹₃SiO_{1/2} units (wherein R¹ is as defined above), (c) R¹₂SiO_{2/2} units (wherein R¹ is as defined above) and (d) SiO_{4/2} units, and in which 5% or more of all silicon-bonded monovalent organic groups are aryl groups; and
(C) a photopolymerization initiator.

2. The ultraviolet-curable silicone composition of claim 1, further comprising:
(D) a monofunctional (meth)acrylate compound which does not include a siloxane structure.

3. The ultraviolet-curable silicone composition of claim 1 or 2, further comprising:
(E) a silane coupling agent which has a (meth)acryloyloxy group.

4. A cured product of the ultraviolet-curable silicone composition of any one of claims 1 to 3.

5. A lens comprising the cured product of claim 4.

## Patentansprüche

1. Durch Ultraviolettstrahlung härtbare Silikonzusammensetzung, umfassend:
(A) ein Organopolysiloxan, das eine Hauptkette aus sich wiederholenden Diorganosiloxaneinheiten und eine Gruppe der folgenden allgemeinen Formel (1) an einem oder beiden Enden aufweist und in dem 5% oder mehr aller siliciumgebundenen einwertigen organischen Gruppen Arylgruppen sind 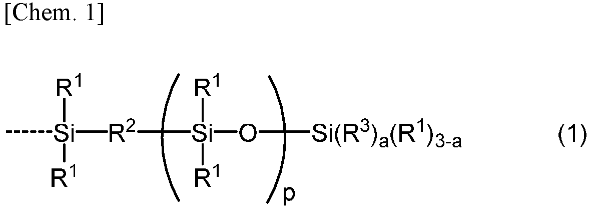 (worin jedes R¹ unabhängig eine einwertige Kohlenwasserstoffgruppe mit 1 bis 20 Kohlenstoffatomen ist, R² ein Sauerstoffatom oder eine Alkylengruppe mit 1 bis 20 Kohlenstoffatomen ist, jedes R³ unabhängig eine Acryloyloxyalkyl-, Methacryloyloxyalkyl-, Acryloyloxyalkyloxy- oder Methacryloyloxyalkyloxygruppe ist, p eine Zahl ist, die die Bedingung 0 ≤ p ≤ 10 erfüllt, a eine Zahl ist, die die Bedingung 1 ≤ a ≤ 3 erfüllt, und die gestrichelte Linie einen Verknüpfungspunkt darstellt);
(B) ein Organopolysiloxanharz, bestehend aus (a) Einheiten der folgenden allgemeinen Formel (2) 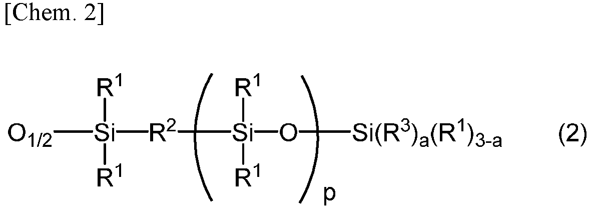 (worin R¹, R², R³, a und p wie oben definiert sind), (b) R¹₃SiO_{1/2}-Einheiten (worin R¹ wie oben definiert ist), (c) R¹₂SiO_{2/2}-Einheiten (worin R¹ wie oben definiert ist) und (d) SiO_{4/2}-Einheiten, und worin 5% oder mehr aller siliciumgebundenen einwertigen organischen Gruppen Arylgruppen sind; und
(C) einen Photopolymerisationsinitiator.

2. Durch Ultraviolettstrahlung härtbare Silikonzusammensetzung nach Anspruch 1, ferner umfassend:
(D) eine monofunktionelle (Meth)acrylatverbindung, die keine Siloxanstruktur aufweist.

3. Durch Ultraviolettstrahlung härtbare Silikonzusammensetzung nach Anspruch 1 oder 2, ferner umfassend:
(E) ein Silan-Kopplungsmittel, das eine (Meth)acryloyloxygruppe aufweist.

4. Gehärtetes Produkt aus der durch Ultraviolettstrahlung härtbaren Silikonzusammensetzung nach einem der Ansprüche 1 bis 3.

5. Linse, umfassend das gehärtete Produkt nach Anspruch 4.

## Revendications

1. Composition de silicone durcissable aux ultraviolets comportant :
(A) un organopolysiloxane qui a une chaîne principale constituée de motifs répétés de diorganosiloxane et un groupe de formule générale (1) ci-dessous à une ou aux deux extrémités et dans lequel 5 % ou plus de tous les groupes organiques monovalents liés à un silicium sont des groupes aryle 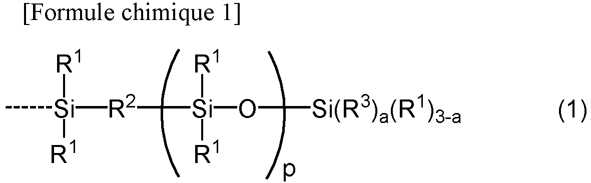 (dans laquelle chaque R¹ est indépendamment un groupe hydrocarbure monovalent possédant 1 à 20 atomes de carbone, R² est un atome d'oxygène ou un groupe alkylène de 1 à 20 atomes de carbone, chaque R³ est indépendamment un groupe acryloyloxyalkyle, méthacryloyloxyalkyle, acryloyloxyalkyloxy ou méthacryloyloxyalkyloxy, p est un nombre qui satisfait à la condition 0 ≤ p ≤ 10, a est un nombre qui satisfait à la condition 1 ≤ a ≤ 3, et les traits pointillés représentent un point d'attache) ;
(B) une résine d'organopolysiloxane constituée (a) de motifs de formule générale (2) ci-dessous 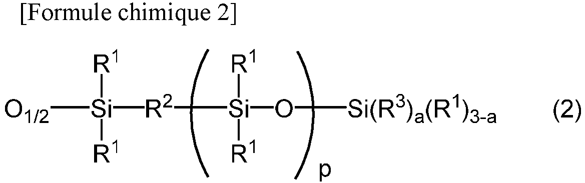 (dans laquelle R¹, R², R³, a et p sont tel que défini ci-dessus), (b) de motifs R¹₃SiO_{1/2} (dans lesquels R¹ est tel que défini ci-dessus), (c) de motifs R ¹ ₂SiO_{2/2} (dans lesquels R¹ est tel que défini ci-dessus) et (d) de motifs SiO_{4/2} et dans laquelle 5 % ou plus de tous les groupes organiques monovalents liés à un silicium sont des groupes aryle ; et
(C) un initiateur de photopolymérisation.

2. Composition de silicone durcissable aux ultraviolets selon la revendication 1, comportant en outre :
(D) un composé de (méth)acrylate monofonctionnel qui n'inclut pas de structure siloxane.

3. Composition de silicone durcissable aux ultraviolets selon la revendication 1 ou 2, comportant en outre :
(E) un agent de couplage au silane qui a un groupe (méth)acryloyloxy.

4. Produit durci de la composition de silicone durcissable aux ultraviolets selon l'une quelconque des revendications 1 à 3.

5. Lentille comportant le produit durci selon la revendication 4.
